# EUROPEAN PATENT APPLICATION

(11) **EP 2 750 347 A1**
(43) Date of publication of application: **02.07.2014**
(21) Application number: 12199413.1
(22) Date of filing: 27.12.2012
(51) Int. Cl.: H04L 29/06

(54) **Location dependent recovery system**

(71) Applicant: Koninklijke KPN N.V., 2516 CK The Hague (NL)
(72) Inventor: Alberts, Albert, 9723 AJ Groningen (NL); van Steenbergen, Ate, 9737 NN Groningen (NL)
(74) Representative: Wuyts, Koenraad Maria

(57) **Abstract**

A registration system (100) for handling account registrations is provided. The system comprises an account registration unit (110), a location unit (140) and a recovery unit (160). The account registration unit (110) is configured to establish digital login credentials for a user of a first client device, the login credentials allowing the user to login to a digital service (135). The location unit (140) is configured to receive over a second electronic data network (150) an electronic enrollment message (142) and later a recovery message. The enrollment and recovery message are linked to the login credentials. For example, the recovery message may sent in case the login credentials are compromised or forgotten. The second electronic network is arranged to determine a geographic enrollment location and a geographic recovery location indicating where the enrollment and recovery message respectively originated. The recovery unit (160) is configured to retrieve in electronic form the geographic enrollment location associated to the login credentials to which the recovery message is linked, and to determine that the enrollment location and the recovery location are within a distance threshold of each other, and in dependence upon a successful determination starting a login recovery action for the login credentials.

## Description

### FIELD OF THE INVENTION

The invention relates to a registration system for handling account registrations comprising an account registration unit configured to establish a digital connection over a first electronic data network with a client device and configured to establish digital login credentials for a user of the client device, the login credentials being for use with a login unit allowing the user to login to a digital service over the first electronic data network with the login credentials.

### BACKGROUND OF THE INVENTION

One way to restrict access to a digital service over an electronic data network is to establish digital login credentials for a user. The digital login credentials may be used to login to a digital service, say at a login unit of the digital service. Many types of digital services may use this mechanism, ranging from e-mail service to banking applications. For example, digital login credentials are used in most Cloud services, software as a service (SaaS), such as workspace solutions collaboration tools, Facebook, Google apps, and so on.

Login credentials usually comprise, or even consist of, a username, i.e., a user ID, and a password. Passwords are a ubiquitous way to provide a minimal level of authentication to a computer user seeking to access a network computer such as a Web site. Login credentials may also use a PKI certificate. The certificate may be used in a protocol between client device and login unit to prove possession of the certificate. The protocol may be, e.g., a challenge-response protocol. Through the login credentials it is hoped that true account holders and only the true account holders can gain access to the service.

In either case, it is possible that login credentials are stolen or forgotten/lost. In the first case other people than true account holders may gain access, in the second case a true account holder cannot get access. For example, a common way for thieves to gain access is to send official-looking emails to bank customers, requesting user names and passwords which, if the illegitimate requests are complied with, are then used to login to online accounts. Likewise, a password that is too short may be guessed by an attacker, while a password that is too long may be forgotten; or in case it is written down lost. Using stored digital credentials implies the risk of losing through computer crashes, etc. It may happen that after a database of user credentials has been hacked, the passwords are reset, so that users can not log on to the services, while only the hacker does have access to it. Or a hacker may create a new account, without the official user knows that the account exists.

Attacks may also occur on a larger scale than on the single account level. For example, an attacker may find some unauthorized way to access a login database. In this way thousands of login credentials may be illegally disclosed. Especially, these large scale attacks are problematic since even after the system has been repaired by removing the unauthorized way of access the problem remains that thousands of accounts are compromised.

In US patent 8079070 an attempt was made to address some of these issues. In that system, when a user successfully logs in to an information server such as an online banking server, an e-commerce server, or a VPN server, for greater security communication is transferred transparently the user to an authentication server for additional authentication. The additional authentication can include comparing elements of a previously deposited cookie on the user computer to test elements, and if the elements, match, granting access and transparently transferring the user computer back to the information server. If the secondary authentication fails, however, the user may be asked questions as tertiary authentication. The user has provided self-defined security questions and answers in the past (which test thus proves false only on first-time login), after which the user is not asked to provide or answer questions again absent the need for tertiary authentication.

### SUMMARY OF THE INVENTION

The inventors have realized that even the system referred to above fails to fully address the issues. For example, when a user loses login credentials he may still be locked out of the service. Likewise if an attacker succeeds in gaining access to all login information, he may be able to impersonate the user for the service, thus gaining illegal access. It is noted that security questions are typically weaker than the passwords they aim to replace. Moreover, the special problems posed by large scale attacks are not addressed.

It would be advantageous to have an improved registration system for handling account registrations. The system comprises an account registration unit and a location unit. The account registration unit is configured to establish a digital connection over a first electronic data network with a client device and configured to establish digital login credentials for a user of the client device, the login credentials being for use with a login unit allowing the user to login to a digital service over the first electronic data network with the login credentials. The location unit is configured to receive an electronic enrollment message over a second electronic data network, the enrollment message comprising an enrollment identifier linking the enrollment message to the login credentials, the second electronic network comprising base stations at multiple different geographic locations arranged to determine a geographic enrollment location indicating where the enrollment message originated, the location unit storing in electronic form the enrollment location together with an association to the login credentials.

The registration system for handling account registrations couples a geographic location to login credentials. This has the advantage that the information of the user both has elements that the user knows or owns (like a password or certificate) but also to an aspect of what the user is (his location). Thus a security level similar to so-called two-factor authentication is achieved without having direct access to the user for e.g. biometric identification.

The location information may be used for several purposes. It could for example be used at each login to the digital services. The inventors have recognized that it is advantageous to reserve the use of the enrolment location for password recovery situations. In this way the user may still access the digital service form any desired geographic location. Only when, for some reason, an increased level of authentication is needed, the geographic enrollment information would then be used.

In an embodiment, the authentication requirements of the account are modifiable by the user. In particular, associated with the account a flag is stored with the login credentials indicating if the location based authentication is needed. This can be advantageous in various circumstances. For example, a user increase the level of authentication to location level, e.g. when the user goes on holiday, and does not want to use the service in the time period, say the coming 3 months. The user is sure that no-one log-ins can occur or that his account is hacked. The next time he logs-in the users authenticates with the location information.

The account may be a digital account with the digital service. The digital connection may be a two-way digital connection, i.e., over an IP-network, such as the internet. The client device, also referred to as 'the first client device', may be a mobile and wireless device, such as a mobile phone, or mobile computer, say a tablet, laptop and the like. The digital login credentials may comprise a username and a password and/or the digital login credentials may comprise a certificate. The login credentials may also comprise a combination thereof and the like. In preferred embodiments the login credentials would be sufficient to login to the digital service. Nevertheless, it is possible for the digital service to require more to login, e.g., the use of a dongle, or of the enrollment location.

The second electronic network comprises base stations at multiple different geographic locations and is arranged to determine a geographic enrollment location indicating where the enrollment message originated. In preferred embodiments, the second electronic network is a wireless network, the base stations are configured to wirelessly receive a message from a further client device. The further client device is also referred to as the 'second client device'; for example, a mobile phone, smart phone, a laptop, and the like. In the second data network the data including the messages may be collected, and routed through wired units (also referred to as communication routers, distributions points and the like) eventually reaching the location unit. The location may then be determined by recording the particular base station that received the enrollment message. Note that the location may only be determined up to a certain resolution, e.g., as determined by cell size. In practice this will not be a problem since it will be impractical to place to high demands on location as this will require an exact orientation of the user with respect to the second network. The base stations have known locations; thus they are useable to derive location information from. In most embodiments they will in fact be at fixed locations.

The first electronic data network may be the same as the second electronic data network. Having the first electronic data network different from the second electronic data increases security. The first electronic data network may be any one of an UMTS and ADSL, DSL, Ethernet, GPRS, WIFI, LTE data network and the like. The second electronic data network may be a short message service (SMS), IVR, HTTP or HTTPS. The enrollment and recovery messages may be text based, as in the case of SMS, but this is not necessary. For example, the second network may be a GSM network. The enrollment and recovery messages may be sent by calling a telephone number and speaking the message. The location unit or recovery unit may obtain the contents of the message by voice or speech recognition software. The message may also by typed in using the number keys of the telephone, in which case DTMF tones are generated. The location unit or recovery unit may recognize the tones. In both cases the message may be transformed to text for ease of storage and comparison.

The location unit stores the enrollment location in electronic form together with an association to the login credentials. For example, the login credentials and enrollment location may be stored together in the same record. For example, they may be stored in separate databases yet have a pointer to each other. The enrolment identifier may comprise the username, and preferably also the password. The enrollment message is typically generated concurrent with the registration (although it could be done later with an existing account as well); at registration time the user is not likely to have lost/forgotten his username/password combination. So there is no problem with linking the enrollment message to this information. A system may find the correct login-credentials based on the username. The password may be verified to make sure the enrollment message is not received from an impersonator.

The enrollment identifier may also or alternatively comprise an identifier received from the account registration unit or location unit. This has the advantage that the password need not be send over the air using the second electronic password. For example, the registration unit may generate an identifier, say a nonce, and communicate it to the user over the first electronic network, the user may then include the identifier in the enrollment message.

The electronic enrollment message originates from the further client device. However, the further client device may be a physically different device, or it may be the same device used for a different function.

As said the enrollment location may be used for additional authentication, e.g., the log-in unit may receive location information from the location unit for each log-in, obtained by sending a log-in message over the second electronic network to the location unit. In this way only log-ins are allowed to originate from a particular geographic region, e.g., with some distance threshold. This has the disadvantage that each log-in becomes more cumbersome. However, this system is particularly useful for log-in recovery operations.

In an embodiment, adding a location is required to add a new account. Also a hacker who creates a new account, without the official user knowing that the account exists would be required to add a location. This would deter creating such an account since, in this case the location of the hacker, would help to trace the hacker because he leaves a physical location of himself or a helper.

In an embodiment, the registration system comprises a recovery unit. The location unit is further configured to receive an electronic recovery message over the second data network. The recovery message comprises a recovery identifier linking the recovery message to the login credentials. The location unit is arranged to obtain a geographic recovery location indicating where the recovery message originated. The recovery unit is configured to retrieve in electronic form the previously stored geographic enrollment location associated to the login credentials to which the recovery message is linked, and to determine that the enrollment location and the recovery location are within a distance threshold of each other, and in dependence upon a successful determination starting a login recovery action for the login credentials. The location unit may use the same mechanism to obtain the recovery location as it used to obtain the enrollment location. The distance threshold may be determined in dependence on several factors, e.g., security (a smaller threshold is more secure) and convenience (a large threshold is less likely to cause problems). In particular, if the second data network is cell based, e.g. each base station receiving requests from a particular geographic area, it may be advisable to select the distance threshold so that messages received from neighboring cells are accepted. For example, the distance threshold may be twice the cell diameter size. Converting cell information to distance information may be done by calculating the distance between the known locations that received the enrollment and recovery message respectively. Interestingly, it is not necessary that the recovery message is received at the same base station as the enrollment message, or even that that base station still exists, only that the device from which it originates was sufficiently close. The login recovery action may comprise sending a message by the registration system containing the new login credential.

For example, the location may be determine by the so-called LBS service of the telecom operator, using signal strengths, of multiple Cells, mapping the Cell id's to a map, and determining the location of the device. This location can be added to the message using e.g. HTTP. Location unit 140 may implemented as a web-service, and the LBS system may be used to provide location based information to it. Location unit 140 may be located in the datacenter of the mobile operator, say the same datacenter where also the Home locator register (HLR), i.e., the user database of the mobile customers is maintained.

The recovery mechanism has the advantage that is capable of recovering of even significant security breaches. For example, consider the situation in which an attacker gained access to the login credentials. For example, he may have hacked the database in which they were stored. This will allow the hacker to use the login credentials to login in to the digital service. Even after the attack was stopped and the hacker was evicted from the system, he may continue his illegal access.

However, a regular user can start a recovery procedure by sending a recovery message from the right location. Thus the system is able to see the difference between the true account holder regaining his account and a hacker changing say passwords of other people's accounts. Interestingly, after the security breach all accounts may be flagged, say by a provider, to require a location based recovery.

In an embodiment, the recovery identifier comprises an identifier received from the recovery unit or location unit. For example, the user may initiate the recovery over the first electronic network, and receive the identifier, say a nonce, for use in the recovery message. The login recovery action may comprise sending a message by the registration system containing new login credentials. In this case corresponding changes are needed with respect to the log-in unit, say storing the new login credentials. In an embodiment, the recovery unit is configured to change the login credentials.

The above mechanism may also be used for forgotten/lost credentials instead of for security breaches. On the other hand, in that case the recovery unit could also be configured to retrieve the login credentials, and wherein the recovery unit is configured to send the login credentials over the second data network.

In an embodiment, the electronic enrollment message and/or recovery message originates from a further client device, i.e., second device. The further device may or may not be the same device as the client device, i.e. first device.

Note that additional security measures may be advantageously combined with the comparison of enrollment and recovery location. For example, the recovery unit may send a secret number, say a PIN code, to the further client device, say a user's cell phone. The secret number may in turn be required by the login unit to be input on the client device, say a user computer, to gain access to the digital service. This step may, e.g., complete a recovery action.

As a further example, the location unit may be configured to determine the geographic enrollment and recovery location indicating where the enrollment and recovery message originated respectively but in addition also configured to determine a telecommunication address, say a telephone number or IMSI number etc, indicating the further client device from which the enrollment and recovery message originated. The recovery unit may be configured to determine that enrollment and recovery message originated from the same client device; Starting the login recovery action for the login credentials may be in further dependence on the successful determine that the same device was used.

An aspect of the invention concerns a registration method for handling account registrations comprising establishing a digital connection by an account registration unit over a first electronic data network with a client device, establishing digital login credentials by the account registration unit for a user of the client device, the login credentials being for use with a login unit allowing the user to login to a digital service over the first electronic data network with the login credentials, and receiving an electronic enrollment message by a location unit over a second electronic data network, the enrollment message comprising an enrollment identifier linking the enrollment message to the login credentials, the second electronic network comprising base stations at multiple different geographic locations arranged to determine a geographic enrollment location indicating where the enrollment message originated, storing by the location unit in electronic form the enrollment location together with an association to the login credentials.

An embodiment of the registration method comprises receiving by the location unit an electronic recovery message over the second data network, the recovery message comprising a recovery identifier linking the recovery message to the login credentials, obtaining by the location unit a geographic recovery location indicating where the recovery message originated, retrieving by a recovery unit in electronic form the previously stored geographic enrollment location associated to the login credentials to which the recovery message is linked, determining by the recovery unit that the enrollment location and the recovery location are within a distance threshold of each other, and in dependence upon a successful determination starting by the recovery unit a login recovery action for the login credentials.

The registration system may be a single integrated electronic device, but may also be distributed over multiple electronic devices. The first and second electronic client device may be a mobile electronic device, mobile phone, etc. It is especially advantageous to select a mobile electronic device as the second electronic client device, so that one may use existing base station type networks that allow determination of geographic message origin.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

In a preferred embodiment, the computer program comprises computer program code means adapted to perform all the steps of a method according to the invention when the computer program is run on a computer. Preferably, the computer program is embodied on a computer readable medium.

An embodiment of the registration system for handling account registrations is provided. The system comprises an account registration unit, a location unit and a recovery unit. The account registration unit is configured to establish digital login credentials for a user of a first client device, the login credentials allowing the user to login to a digital service. The location unit is configured to receive over a second electronic data network an electronic enrollment message and later a recovery message. The enrollment and recovery message are linked to the login credentials. For example, the recovery message may be sent in case the login credentials are compromised or forgotten. The second electronic network is arranged to determine a geographic enrollment location and a geographic recovery location indicating where the enrollment and recovery message respectively originated. The recovery unit is configured to retrieve in electronic form the geographic enrollment location associated to the login credentials to which the recovery message is linked, and to determine that the enrollment location and the recovery location are within a distance threshold of each other, and in dependence upon a successful determination starting a login recovery action for the login credentials.

### BRIEF DESCRIPTION OF THE DRAWINGS

These and other aspects of the invention are apparent from and will be elucidated with reference to the embodiments described hereinafter. In the drawings,
Figure 1 is a schematic illustration of a registration system 100,
Figure 2 is a schematic illustration of a second electronic data network 150,
Figures 3 and 4 are flow chart illustration registration methods,
Figure 5 is a schematic illustration of a registration system.

It should be noted that items which have the same reference numbers in different Figures, have the same structural features and the same functions, or are the same signals. Where the function and/or structure of such an item has been explained, there is no necessity for repeated explanation thereof in the detailed description.

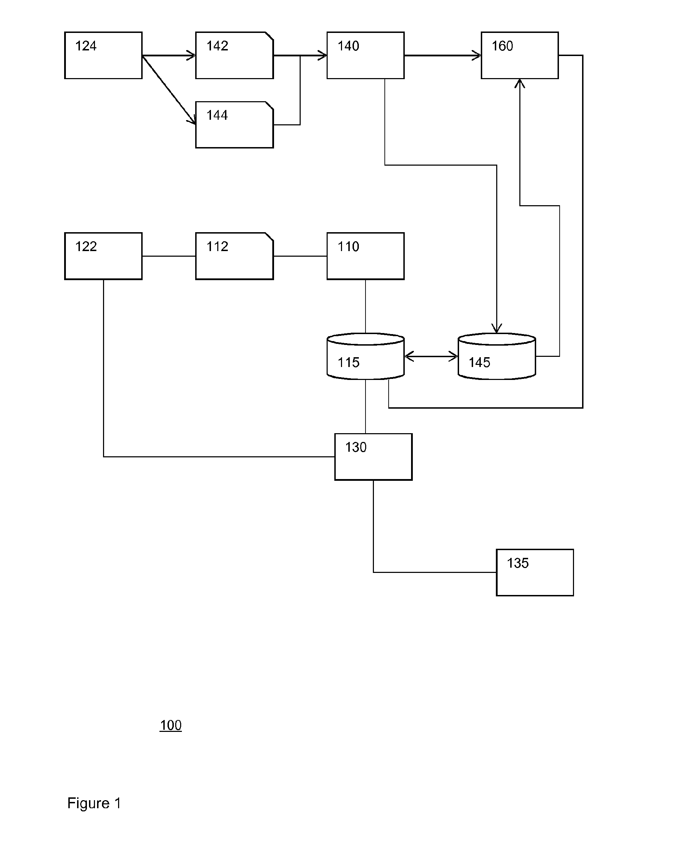

**List of Reference Numerals in figure 1, 2, and 5:**

| | |
|---|---|
| 100 | a registration system |
| 110 | an account registration unit |
| 112 | an account registration message |
| 115 | an account registration database |
| 122 | a first client device |
| 124 | a second client device |
| 130 | a login unit |
| 135 | a digital service |
| 140 | a location unit |
| 142 | an electronic enrollment message |
| 144 | an electronic recovery message |
| 145 | a location database |
| 150 | a second electronic data network |
| 151, 153, 155, 157 | a base station |
| 152, 154 | communication routers |
| 160 | a recovery unit |
| 500 | a registration system |
| 510 | a recovery system |
| 520 | a digital service system |

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

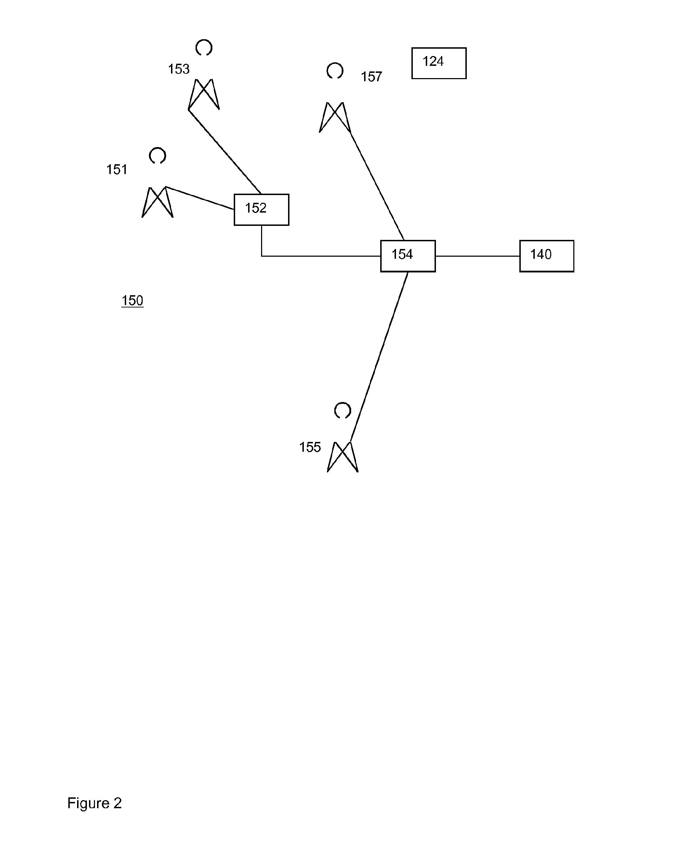

**Figure 1** **and** **2** illustrate in schematic form a registration system 100. Registration system 100 comprises an account registration unit 110 and account registration database 115.

Figure 1 shows the registration unit 100 and a first client device 122. The registration device is configured to establish a digital connection over a first electronic data network (not separately shown) with first client device 122. For example, the first client device 122 may be computer, such as desktop or mobile computer. The first electronic data network may be an Ethernet type network; it may be an intranet, a vpn; it may be the internet. The client device and registration device exchange account registration messages 112. For example, in a first account registration message from first client device 122 to account registration unit 110 a desired username and password may be communicated. In a second account registration message from account registration unit 110 to first client device 122, the user may be informed about the availability of the username. Alternatively, account registration unit 110 may decide on the password or even on the username itself and communicate the choice to first client device 122 in an account registration message. The account registration messages are transmitted over the first data network.

Account registration unit 110 is connected to an account registration database 115 to store login credentials. Depending on the type of login credential used, account registration unit 110 may store different information. For example, in case a username/password combination is used for login credential, account registration unit 110 may store the complete login credential at account registration database 115, possibly in encrypted form. However if account registration unit 110 uses a public/private key type login or a zero knowledge protocol, account registration unit 110 may store different information is stored at first client device 122. Possibly, account registration unit 110 uses public-key authentication. For example, first client device 122 may receive a private certificate and account registration unit 110 keeps the public certificate. In this case possession of the public certificate (e.g. containing a public RSA key) is sufficient to verify authentication, but possession of the private certificate (e.g. containing a private RSA key) is needed to prove authenticity. We will assume, for simplicity a conventional username/password combination but it is noted that the system equally applies to more advanced forms of login credentials.

Figure 1 shows a digital service 135 and corresponding login unit 130. First client device 122 may use the login credential to login at login unit 130. Login unit 130 is coupled to account registration database 115 to retrieve login credentials. Login unit 130 verifies that the information received from first client device 122 is in accordance with information it retrieves from account registration database 115. For example, in case the login credential is username/password, login unit 130 may retrieve from account registration database 115 the password corresponding to the received username and verifies that the passwords are equal. Note that usual variations of username/password storage apply, for example, instead of comparing passwords, the password may be stored in a hashed and salted form. In that case login unit 130 generates a similarly slated and hashed version of password received from first client device 122 and compares that they are equal. If login unit 130 determines that first client device 122 is authorized based at least on the received login credentials, he will allow first client device 122 access to digital service 135.

The first electronic data network may be any one of a Mobile IP network, UMTS, such as GPRS/LTE, and Fixed IP networks, such as ADSL, including DSL, Ethernet, Fibre, Cable and data networks.

In practice, login unit 130, account registration database 115 and digital service 135 may be distributed in various ways. For example, login unit 130 and digital service 135 may be combined in a single server, while account registration database 115 is combined with account registration unit 110; or account registration unit 110, account registration database 115 and login unit 130 are combined whereas digital service 135 is a separate server; or account registration unit 110, account registration database 115, login unit 130 and digital service 135 may all be combined in one server. If login unit 130 and digital service 135 are not combined, first client device 122 may be given a ticket valid for a limited time, say in the form of a cookie. The ticket represents the access given by login unit 130 to first client device 122 and may be sent to digital service 135 to obtain access.

Registration system 100 further comprises a location unit 140. The location system is typically located near the HLR in the mobile operator datacenter. The mobile datacenter can be the same datacenter as the datacenter for the digital service, or another datacenter. In case of another datacenter, the servers of can be connected via a back-end IP network of the provider which is not exposed to the internet. If the internet is used a secure tunnel is preferably used. Figure 1 further shows a second client device 124. Location unit 140 is configured to receive messages from second client device 124 over a second electronic data network 150. Figure 2 show more detail of the second electronic data network 150. Second electronic data network 150 comprises multiple base stations 151, 153, 155 and 157. The base stations are located at multiple different geographic locations. A base station can receive a message from second client device 124 over the air, i.e., wirelessly. Depending on the geographic location of second client device 124 a different base station is capable of receiving the message. The geographic area in which a base station can receive messages from second client device 124 is called a cell. There may be some overlap between cells. Because of the geographic distribution of the base stations, information regarding which base station received a message gives approximate information regarding the location of second client device 124. For example, in figure 2 second client device 124 is shown close to base station 157. When base station 157 receives a message from second client device 124 it may be deduced that second client device 124 is somewhere in the vicinity, i.e., in base station 157's cell. The exact location is not known. If second client device 124 is located, say between base station 151 and base station 153 the situation is worse, depending on circumstances second client device 124 may be in base station 153's cell or in base station 151's cell. The latter problem is solved by choosing the distance threshold large enough (see below). Second electronic data network 150 may comprise distributions points where wirelessly received messages of one or more base stations are collected and passed forward. Figure 2 shows the optional distributions points 152 and 154, also known as Base Station Controlers.

Second client device 124 sends an enrollment message 142 to location unit 140. Location unit 140 obtains the geographic enrollment location where enrollment message 142 originated. Locations may be expressed, say, in coordinates, but they may also be represented in different ways, say a representation of the cell number, postal code region etc. enrollment message 142 contains an identifier that links enrollment message 142 to the login credentials established by account registration unit 110 for first client device 122. For example, among other possibilities, enrollment message 142 may comprise the username. Location unit 140 may receive the enrollment location from the second network or from a base station directly. Typically, location unit 140 will be implemented by a telecommunication provider. Location unit 140 may be part of the network or associated with it. Location unit 140 is configured to store the enrollment location. In the embodiment, shown in Figure 1, the enrollment location is stored in a location database 145. The enrollment location is stored together with an association with the login credential. This maybe the username, it may be a pointer, a reference, and the like. Alternatively, databases account registration database 115 and location database 145 may be combined in a single database. In the latter case the association may be accomplished by storing the login credential and enrollment location in the same record. However, splitting the databases has the advantage that the recovery service may be maintained as a separate service from running the digital service 135.

In the embodiment shown in figure 1, registration system 100 further comprises a recovery unit 160. It is noted that the enrollment location may be usefully employed without a recovery unit. For example, the enrollment location may be used as an additional authentication measure for use in say login unit 130.

Recovery unit 160 is used to start a recovery action to regain access to digital service 135. Location unit 140 is further configured to receive an electronic recovery message 144 over the second data network. Just as with enrollment message 142, location unit 140 is arranged to obtain from second electronic data network 150 a geographic location, in this case the recovery location. The geographic recovery location indicates where recovery message originated 144 originated. The recovery message 144 comprises a recovery identifier linking the recovery message to the login credentials. The recovery identifier may be the same as the enrollment identifier but this is not necessary. The recovery identifier may be the username, or an identifier received from registration system 100, say from recovery unit 160. In case a reset of the password is necessitated by an information leak, say an attack, the identifier may even contain the password. Although the password may be known to the attacker, it will not be known to typical members of the public; accordingly this measure protects against attacks utilizing the recovery function by different people than the attackers who gained access to, say account registration database 115.

Recovery unit 160 is configured to determine from the recovery identifier to which login credentials it is linked, and to determine from the login credentials to which geographic enrollment location to login credentials are associated. Recovery unit 160 comprises a distance unit to calculate a distance between the enrollment location and the recovery location. For example, both locations may be converted to coordinates, and from the coordinates a Euclidean distance may be calculated. Alternatively, the distance unit may count the number of intermediate cells that lie between the enrollment cell and the recovery cell; say the minimum number of cells that need to be traversed to go from one location to the other. The determined distance is representative of a geographic distance. Preferably, the geographic distance is equal to the actual geographic distance between the positions of the device at enrollment and recovery within an accuracy bound, say within 10%. However, that standard may not be achievable, and other more approximate representations geographic distance may be used, say number of intermediate cells.

Should the distance unit determine that the enrollment location and the recovery location are close together it is taken as proof that the same person is doing the recovery as did the enrollment. This is particularly advantageous is case of a hack which caused the passwords database 115 and possibly even database 145 to be known at the attacker. A suitable distance threshold may be taken as 100 meter, say, or as twice a cell diameter, to limit the recovery location to approximately the house where enrollment took place. However, the distance may also be set at say at 1 kilometer, 5 kilometers or more; this will lift restrictions on recovery considerably, without significantly increasing possibilities for attackers.

Shown are a first client device 122 and a second client device 124. Typically, both client devices will be owned and/or operated by the same user. The user (not shown) wants access to a digital service 135. The digital service may run on a server, such as a web server etc. To get access to the server log-in credentials are needed with which the user may login using the first client device at a login unit 130 associated with the digital service.

Typically, the account registration unit 110, location unit 140, recovery unit 160 comprise a microprocessor (not shown) which executes appropriate software stored at the device, e.g. that the software may have been downloaded and stored in a corresponding memory, e.g. RAM (not shown). The devices digital service 135 and login unit 130 may also be equipped with a microprocessor and memory (not shown).

Below an example is given for the various messages and data storage:
1. First client device 122 sends account registration message 112 to account registration unit 110 containing username 'userl234@kpn.com' and password 'RGJde3@'. Account registration unit 110 responds by making a record in database 115 containing the username and password selected. The record represents the account that is now created. Note that payment or other authorization may be required before account registration unit 110 takes the action. The username and password are login credentials which in this case are chosen by the user himself.
2. Second client device 124 (typically operated by the same user) sends enrollment message 142 to location unit 140 a message containing username 'user123@kpn.com'. The username links this enrollment message to the login credentials. Location unit 140 obtains from second electronic data network 150 the enrollment location where second client device 124 is now located and makes a record in location database 145. The record contains the username and the enrollment location. The username serves as association between the enrollment location and the login credentials. Optionally, the enrollment message may also contain password 'RGJde3@'. This makes it less likely that the enrollment message was received from an imposter. On the other hand there is a slight chance of the message being intercepted. The message may be sent using SMS.
3. The user may login at login unit 130 to gain access to digital service 135 using his login credentials
4. When the user lost his password, he sends a recovery message 144 to location unit 140. The recovery message contains his username. The username allows finding the corresponding login credentials. If the recovery location was close enough to the enrollment location a password recovery is started, e.g., by sending the old or a new password to a particular location, say in an SMS in an e-mail etc.

Other possibilities are account registration unit 110 sends an identifier to first client device 122, second client device 124 sends an enrollment message containing said identifier. This avoids sending the username and/or password over the second network. The same may be used for the recovery message. For example, one may require that the recovery is initiated in a digital connection between recovery unit 160 and first client device 122 over the first network. In this initial recovery phase, the user may be asked questions, such as security questions. In case the recovery is needed because of an attack instead of a forgotten password, the user may be required to give his password. Recovery unit 160 may verify the password with account registration database 115. In the first phase the user is given a recovery identifier. In a second recovery phase, the user sends a recovery message containing the recovery identifier.

Below more details of a further embodiment are given.

During a Registration phase, an account may be created. For example, one may give the information of a username and password. A message is sent over a wireless telecommunication network to a provider using a mobile service. For example, an SMS is sent to a number of the provider (say 06-11111244) with content username and password. The location of the mobile from which the SMS was sent is retrieved from the network and stored with the account. This is preferably done by the telecom provider, because access to the network is needed. During a recovery phase, say one has lost his password, so that access to the account is lost. A message is sent from, preferably the same, mobile device over, typically the same, wireless telecommunication network, and to, typically the same, provider from the special location. The provider now assured of the authenticity of the user, for example, because no one else knows the special location. Then password recovery is done. For example, by resetting the password and sending the reset password to the user's mobile number (e.g. the device used for the recovery message).

This protects well against hackers. Attackers may be able to gain usernames and passwords, and may even change those passwords. However, the user can reset it again en the attacker (hacker) has lost access to the account. One reason is that there is distributed authentication over many locations. A single hacker cannot go to all those different locations.

It is even possible to reset at the server all e-mail passwords, say by the ISP. This may be necessary, say, if all or some email passwords are hacked.

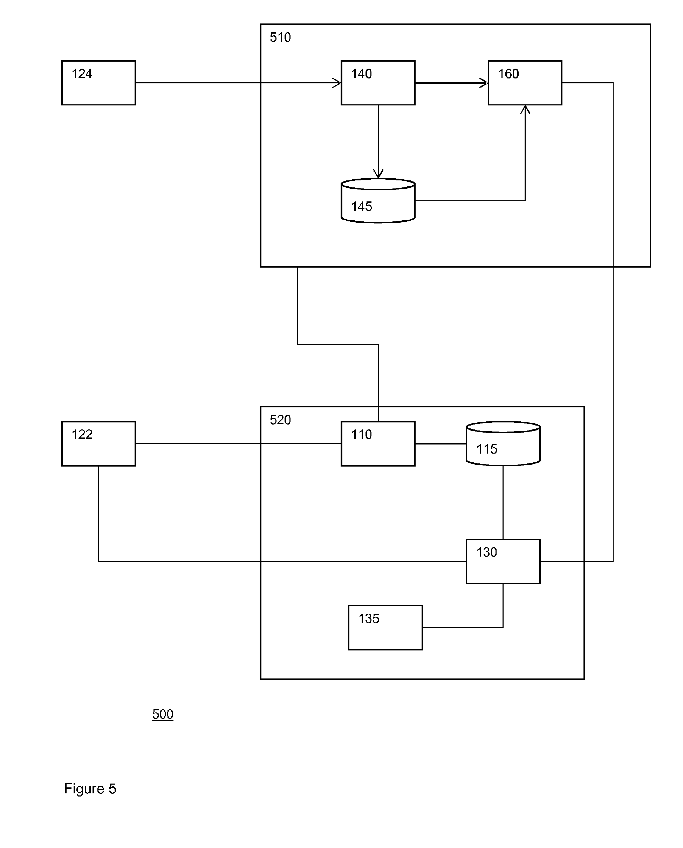

**Figure 5** shows a particular advantageous registration system 500, comprising a recovery system 510 and a digital service system 520. System 500 may have the same components as the systems according to figures 1 and 2; however, in system 500 the recovery operation is organized as a service of the telecommunication provider, e.g., an operator of the second data network 150.

Recovery system 510 comprises a location unit 140, a location database 145, and a recovery unit 160. Digital service system 520 comprises an account registration unit 110, an account registration database 115, a login unit 130, and a digital service 135. Also shown are a first client device 122 and a second client device 124. The two client devices are controlled by the account holder of the digital service.

Digital service system 520 may be a server and may be based on a conventional system, say a web server, file server, mail server and the like. However, digital service system 520 has an interface to recovery system 510. Recovery system 510 may organized as a server, although this is also not needed. Typically, recovery system 510 will be operated by or for the operator of the second network 150. Recovery system 510 is provided with an interface to digital service system 520 and vice versa (interfaces are not separately shown).

When digital service system 520 generates a new account, it communicates to the user, say via first client device 122 that it should contact recovery system 510 through his second client device using second electronic network 150. Although the second client device may be the same as the first client device; the second communication device has the possibility of determining geographic origination location of a message. Digital service system 520 sends a message through the interfaces to recovery system 510 that an enrollment message can be expected, it also indicates the enrollment identifier. The user contacts recovery system 510, say through a special telephone number. Recovery system 510 receives the enrollment messages and stores it with the enrollment identifier and the enrollment location in database 145.

When recovery is needed, digital service system 520 informs recovery system 510 that recovery is needed and sends the recovery identifier; this may be initiated from login unit 130 to recovery unit 160. Either the recovery identifier is the same, say a username, or digital service system 520 also informs recovery system 510 what the corresponding enrollment identifier was. When recovery system 510 receives the recovery messages, finds the enrollment locations, through the recovery identifier and/or enrollment identifier and performs the checks described above on distance and the like. When recovery unit 160 determines that recovery is allowed it sends a message to digital service system 520, e.g., comprising the recovery identifier; if determination is negative, it may also send a message.

Digital service system 520 may before or after do checks of its own, say security questions, but at least in dependence of the message of determination received from recovery system 510 the recovery is done; say a password is reset, and/or send to first client device 122. Possibly, second client device 124 sent the new password in the recovery message which is communicated from recovery system 510 to digital service system 520.

Interestingly, this system provides the same security increases, but protects privacy of the users better. The digital service does not gain access to the location of the user. So the user may use trust this recovery feature, as long as it trust the recovery service. This means that relatively small, or untrusted etc websites may use this advantageous technique even though a user would not allow the website to know his location.

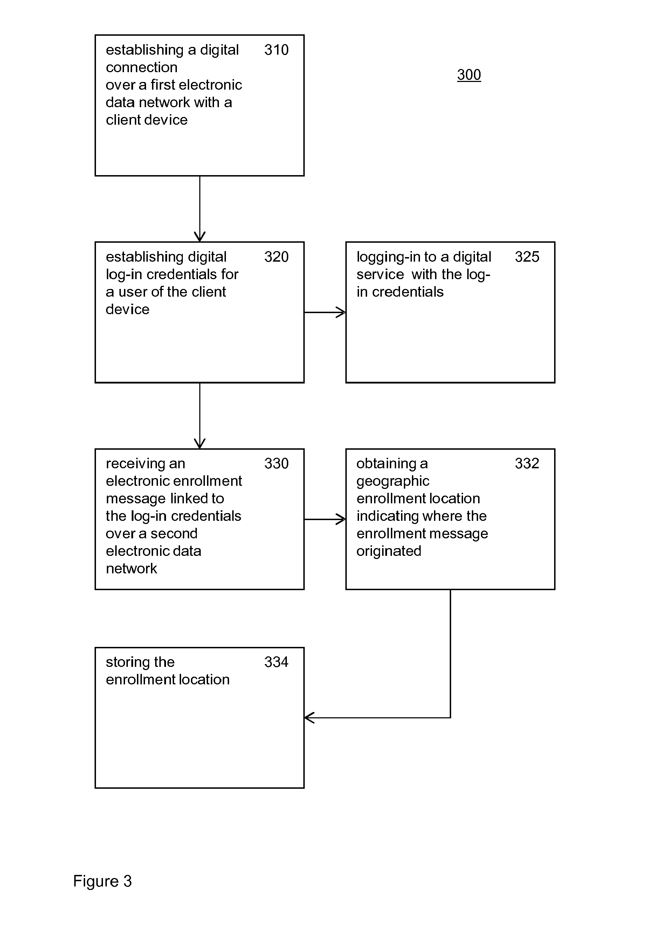

**Figure 3** shows in the form of a flowchart a possible registration method.

In step 310 a digital connection is established with first client device 122 over a first electronic data network. In step 320 digital log-in credentials for a user of the client device 122 are established. This step may also occur before step 310. In optional step 325 the user uses the credentials to gain access. In step 330 an electronic enrollment message is received linked to the log-in credentials over a second electronic data network. Linking two messages to each other may be done in various way, e.g., by containing common information. In step 332 a geographic enrollment location is obtained indicating where the enrollment message originated. In step 334 the enrollment location is stored at a suitable location, say in a database.

In this way the authentication of the user may use a username and password, but also a particular location. Even is attackers would gain access to this information, they can never be at all those places. Thus a type biometric identification is obtained, i.e., utilizing something the user is rather than what he has or knows.

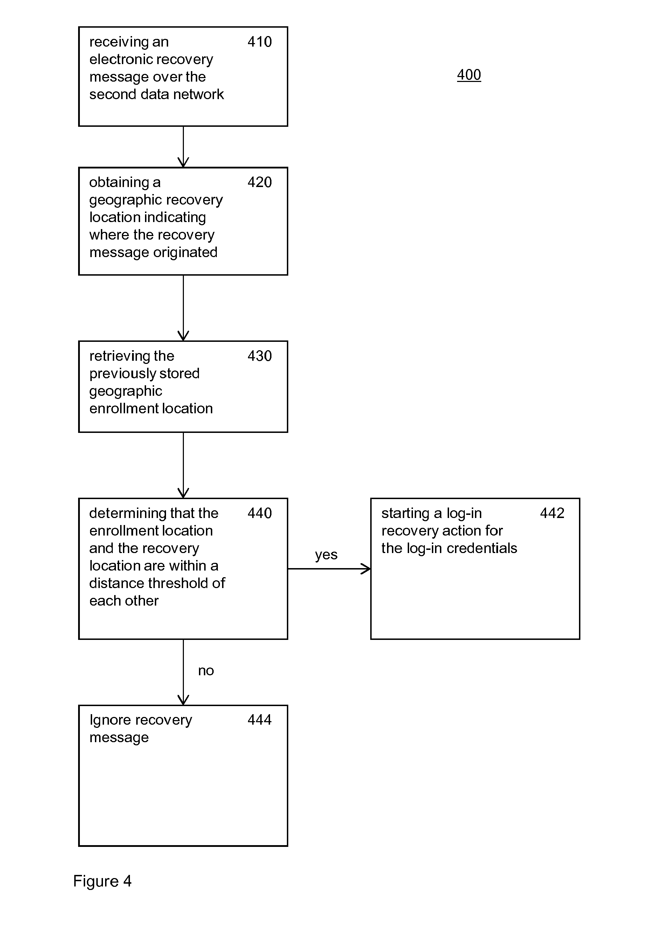

**Figure 4** shows a possible recovery method 400. The method may be applied after the method of figure 3 has been applied. However, it is also possible to use the method of figure 3 without that method. For example, the enrollment location may have been obtained in a different manner. For example, it may have been obtained by asking for a location, say by an operator over the telephone; it may have been listed on an enrollment form, etc.

In step 410 an electronic recovery message is received over the second data network. The second network is adapted for determining a location where message originate. In step 420, a geographic recovery location indicating where the recovery message originated is obtained. The location may be obtained from the second network. The location unit may be part of the second network, or functionally coupled thereto. In step 430 the previously stored geographic enrollment location is retrieved. For example, the location may be retrieved from a data base, possibly a dedicated database for that purpose. In step 440, it is determined that the enrollment location and the recovery location are within a distance threshold of each other. If that is the case, i.e., if the enrollment location and the recovery location are within a distance threshold of each other, then in step 442 a log-in recovery action is started for the log-in credentials. Such actions may take many forms, e.g., the password may be sent using some form of communication, say, SMS, an https page etc, and e-mail to a known account. An SMS is considered more secure. If the determination was not successful, i.e., if the enrollment location and the recovery location are not within a distance threshold of each other the recovery action is not started. In step 444 this is done by simply ignoring the recovery message. Other appropriate actions are possible. For example, the client may be informed that his recovery location is incorrect. For less secure solutions, the client may be told what the enrollment location was, and given another opportunity to do the recovery. The last option is interesting to recovery from large scale password leaks. For an attacker it is much more burdensome to go thousands of location than it is for a user to go to a single location. The user may also be invited to come to an office an identify himself using other means, say, a passport.

Many different ways of executing the methods 300 and 400 are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 325 and 330 may be executed, at least partially, in parallel. Moreover, a given step may not have finished completely before a next step is started.

A method according to the invention may be executed using software, which comprises instructions for causing a processor system to perform method 300 and/or 400. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A registration system (100) for handling account registrations comprising
- an account registration unit (110) configured to establish a digital connection over a first electronic data network with a client device (122) and configured to establish digital login credentials for a user of the client device, the login credentials being for use with a login unit (130) allowing the user to login to a digital service (135) over the first electronic data network with the login credentials, and
- a location unit (140) configured to receive an electronic enrollment message (142) over a second electronic data network (150), the enrollment message comprising an enrollment identifier linking the enrollment message to the login credentials, the second electronic network comprising base stations (151, 153, 155, 157) at multiple different geographic locations arranged to determine a geographic enrollment location indicating where the enrollment message originated, the location unit storing in electronic form (145) the enrollment location together with an association to the login credentials.

2. A registration system as in Claim 1, wherein the location unit is further configured to receive an electronic recovery message (144) over the second data network, the recovery message comprising a recovery identifier linking the recovery message to the login credentials, the location unit being arranged to obtain a geographic recovery location indicating where the recovery message originated, the system further comprising
- a recovery unit (160) configure to retrieve in electronic form the previously stored geographic enrollment location associated to the login credentials to which the recovery message is linked, and to determine that the enrollment location and the recovery location are within a distance threshold of each other, and in dependence upon a successful determination starting a login recovery action for the login credentials.

3. A registration system as in any one of the preceding claims, wherein the first electronic data network is different from the second electronic data network.

4. A registration system as in any one of the preceding claims, wherein the first electronic data network is any one of a Mobile IP network, UMTS, such as GPRS/LTE, and Fixed IP networks, such as ADSL, including DSL, Ethernet, Fibre, Cable and data networks.

5. A registration system as in any one of the preceding claims, wherein the second electronic data network is a short message service (SMS).

6. A registration system as in any one of the preceding claims, wherein the login credentials comprise a username and a password, and wherein the enrolment identifier and/or the recovery identifier comprises at least the username, and preferably also the password.

7. A registration system as in any one of the preceding claims, wherein the enrollment identifier comprises an identifier received from the account registration unit or location unit.

8. A registration system as in any one of the preceding claims, wherein the recovery identifier comprises an identifier received from the recovery unit or location unit.

9. A registration system as in any of claims 2 to 8, wherein the recovery unit is configured to retrieve the login credentials, and wherein the recovery unit is configured to sent the login credentials over the second data network.

10. A registration system as in any of claims 2 to 9, wherein the recovery unit is configured to change the login credentials.

11. A registration system as in any one of the preceding claims, wherein the electronic enrollment message and/or recovery message originates from a further client device (124).

12. A registration method for handling account registrations comprising
- establishing a digital connection by an account registration unit (110) over a first electronic data network with a client device (122),
- establishing digital login credentials by the account registration unit (110) for a user of the client device, the login credentials being for use with a login unit (130) allowing the user to login to a digital service (135) over the first electronic data network with the login credentials,
- receiving an electronic enrollment message (142) by a location unit (140) over a second electronic data network (150), the enrollment message comprising an enrollment identifier linking the enrollment message to the login credentials, the second electronic network comprising base stations (151, 153, 155, 157) at multiple different geographic locations arranged to determine a geographic enrollment location indicating where the enrollment message originated, and
- storing by the location unit in electronic form (145) the enrollment location together with an association to the login credentials.

13. A registration method as in Claim 12, comprising
- receiving by the location unit an electronic recovery message (144) over the second data network, the recovery message comprising a recovery identifier linking the recovery message to the login credentials,
- obtaining by the location unit a geographic recovery location indicating where the recovery message originated,
- retrieving by a recovery unit (160) in electronic form the previously stored geographic enrollment location associated to the login credentials to which the recovery message is linked,
- determining by the recovery unit that the enrollment location and the recovery location are within a distance threshold of each other, and
- in dependence upon a successful determination starting by the recovery unit a login recovery action for the login credentials.

14. A computer program comprising computer program code means adapted to perform all the steps of any one of claims 12 and 13 when the computer program is run on a computer.

15. A computer program as claimed in claim 14 embodied on a computer readable medium.
